Europäisches Patentamt

European Patent Office

Office européen des brevets

(11) Publication number: **0 127 560**
**B1**

(12) **EUROPEAN PATENT SPECIFICATION**

(45) Date of publication of patent specification: **03.01.90**

(21) Application number: **84630057.2**

(22) Date of filing: **03.04.84**

(51) Int. Cl.⁵: **F 16 L 15/04,** F 16 L 19/03,
F 16 C 15/00, E 21 B 17/02

(54) **Threaded coupling comprising a ventable seal.**

(30) Priority: **29.04.83 US 489752**

(43) Date of publication of application:
**05.12.84 Bulletin 84/49**

(45) Publication of the grant of the patent:
**03.01.90 Bulletin 90/01**

(84) Designated Contracting States:
**DE FR GB IT**

(56) References cited:
**FR-A-1 286 836**
**FR-A-2 194 287**
**GB-A-2 064 041**
**US-A-2 087 185**
**US-A-2 631 871**
**US-A-2 907 589**
**US-A-3 047 316**

(73) Proprietor: **BAKER-HUGHES INCORPORATED**
**3900 Essex Lane**
**Houston Texas 77027-5115 (US)**

(72) Inventor: **Bollfrass, Charles A.**
**5880 Valley Forge**
**Houston Texas 77057 (US)**
Inventor: **Chelette, K. Darrel**
**21139 Southern Colony**
**Katy Texas 77449 (US)**

(74) Representative: **Waxweiler, Jean et al**
**OFFICE DENNEMEYER S.à.r.l. P.O. Box 1502**
**L-1015 Luxembourg (LU)**

Courier Press, Leamington Spa, England.

## Description

This invention relates generally to apparatus for sealing and more specifically relates to apparatus for sealably coupling tubular members such that an occlusive seal is formed in response to pressure from a first direction, but that the seal will vent pressure from a second direction.

In many applications, and particularly in applications commonly found in the oil and gas industry, it is necesary and desirable to couple tubular members together such that an occlusive seal is formed and will be maintained, even under conditions involving severe temperatures and pressures. In the oil and gas industry, this need typically arises with regard to well casing and tubing which typically must be capable of achieving such sealing through multiple cycles of coupling and uncoupling of the members.

Several mechanisms have been used by the prior art to attempt to provide the characteristics described above. Oilfield tubular members, such as well casing and tubing typically have member having a male thread or pin end designed to engage an axially aligned tubular member having a female thread or box end. It is known in the art to seal between the members by using a metal-to-metal seal. Often, the box end will have a section exhibiting a frusto-conical aperture profile. The pin end will then have a section having a generally frusto-conical profile except that the surface will have an axial peripheral bow, causing the section to exhibit a convex profile which is non-complementary to the corresponding seal surface of the box end. When the pin and box ends are threadably coupled to the designed thread stop, the convex surface of the pin engages the surface of the frusto-conical section of the box, forming a point-of-contact metal-to-metal seal. To achieve the desired sealing the mutually-engaging surfaces of the pin and box must be smooth and true, and are often highly polished to achieve this end.

Another form of metal-to-metal seal exhibits complementary abutting shoulders on the pin and box such that the shoulders engage one another upon threaded coupling, often providing a thread stop for the coupling. Again, engaging surfaces of the seal must be in extremely smooth condition to effect a suitable seal.

As the pressures to which such a seal is subjected rise, the criticalness of the condition of the contact surfaces increases. It is not uncommon for damage to occur to the engaging seal surfaces of the tubular members, particularly to that of the pin member, through contact during handling or during stabbing of the members prior to rotation for engagement. Metal-to-metal seals are also often susceptible to damage resulting from corrosive environments which attack the surface integrity of the seals. Further, metal-to-metal seals often vent to pressure from a secondary direction at a lower pressure than that at which they sealed in response to pressure from a primary direction. After this venting, the seals do not necessarily return to sealing against fluid pressures from the primary direction equal to those which were originally sealed against.

In an attempt to cure some of these deficiencies, the prior art has supplemented the metal-to-metal seals with deformable plastic seals adapted to be compressed between the two members and seal therebetween. These plastic seals provide a secondary or backup seal to the metal-to-metal seal. The secondary plastic seals may be situated adjacent the metal-to-metal seals or may be placed in grooves adjacent the thread coupling or in the thread coupling itself.

Several difficulties are presented by the use of these plastic seals. Initially, because the seals are compressed directly between two surfaces, the seals typically vent at equal pressures from both primary and secondary directions, thereby effectively sealing only up to a threshold level at which the seal vents. A major difficulty with the plastic seals is that they typically have a thermal coefficient of expansion which is 6 to 10 times that of the steel parts with which they are associated. Two significant problems thus result. First, as temperature rises, the plastic seals will expand to an extent much greater than will the tubular members. Therefore, the plastic seals act as a wedge, actively forcing the metal members apart. This can cause not only a reduction or elimination of the integrity of the metal-to-metal seals, but can also separate the thread annulus such that the tensile efficiency of the connection is reduced. Secondly, where the secondary plastic seals are situated such that a fluid leaking past the primary seal may enter the thread annulus, because of the essentially non-venting characteristics of the plastic seals, the fluid may be trapped within the thread annulus where it may expand and again weaken the integrity of the threaded coupling.

US—A—2907589 discloses a prior art threaded coupling as described in the preamble of claim 1.

The object of the invention to provide an apparatus for forming a self-energizing seal between two tubular members, such seal engaging in response to pressure from a primary direction while venting to pressure from a secondary direction, thereby maintaining the integrity of the metal-to-metal seal and thread annulus.

This object is achieved by the features of the characterizing part of claim 1. Embodiments of the invention are described in the dependent claims.

The two members are adapted to be coupled together are conformed such that when the members are coupled, one in inserted engagement within the other, they will have surfaces in proximate relation to one another. An elastic sealing member is retained to one surface, preferably by means of a groove within the surface of one of the members. To at least one side of the seal member, a first gap or void will be formed between the two surfaces, this gap to the side of the seal from which pressure to be sealed against will flow. There may be either a second smaller gap or no gap between the surfaces on the opposite side of the seal member, the side from which pressure to be vented will flow. In response to a pressure in the larger gap between the two surfaces, the sealing member will deform, into the narrower void on the opposite side of the sealing member if such is present, occupying such void and providing an occlusive seal between the two members. Similarly, in response to a pressure from the contacting or most convergent area between the two surfaces, the seal will distort and flow into the wider void between the two surfaces, thus causing the sealing member to lose contact with one of the surfaces thus allowing such pressure to vent past the sealing member.

The invention will now be described by way of example with reference to the accompanying drawings wherein:

Figure 1 illustrates a coupling between two tubular members having upper and lower sealing segments in accordance with the present invention, illustrated partially in cross section;

Figure 2 depicts the lower sealing segment of the coupling of Figure 1, illustrated in cross section;

Figure 3 illustrates a coupling between two tubular members, such coupling having a step-thread design between the upper and lower sealing segments, illustrated partially in cross section;

Figure 4 illustrates the upper sealing segment of the coupling of Figure 5;

Figure 5 depicts a coupling of two tubular members including two sealing segments in accordance with the present invention, such coupling also having a step-thread design and such threads having negative angle load flanks, such coupling depicted partially in cross section; and

Figure 6 is a cross sectional view of an unstressed sealing member in position on a sealing surface in accordance with the present invention.

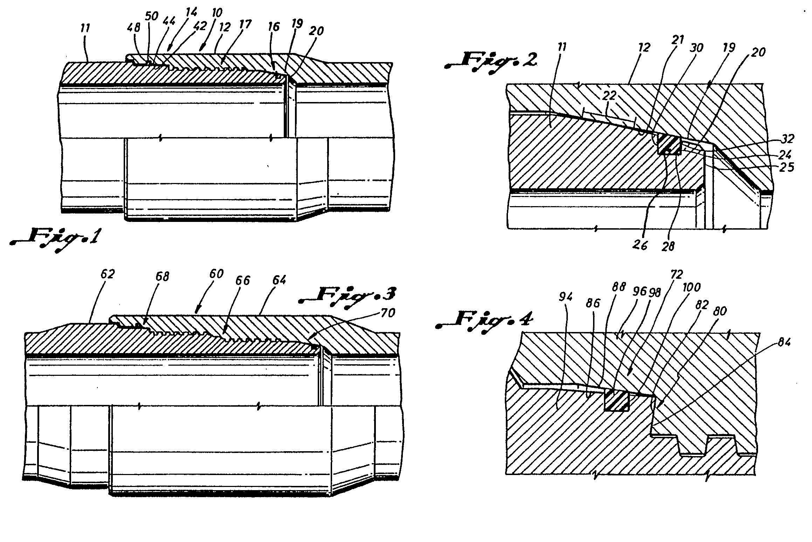

Referring now to the drawings in more detail, particularly to Figure 1, therein is illustrated a coupling 10 between two tubular members 11 and 12 including the sealing mechanism the present invention. The tubular members shown in Figures 1 through 6 are segments of well casing or tubing, such members being an environment in which the sealing mechanism of the present invention has particularly significant applicability. It is to be clearly understood that although the sealing mechanism will be described and illustrated in respect to well tubing or casing, the sealing mechanism may be suitable for uses with various other forms of well products, such as casing hangers or packers and may have applicability in environments wholly unrelated to well products.

First member 11 has a threaded pin end and second member 12 has a complimentarily threaded box end. It will be seen that the thread coupling between members 11 and 12 extends continuously between upper and lower sealing segments 14 and 16, respectively. The illustrated coupling of first member 11 and second member 12 has an "upset" of flared dimension to the box end of second member 12. It is to be understood that the present invention is suitable for use with smooth joint couplings also. In this particular preferred embodiment, each seal segment includes a metal-to-metal seal and a deformable seal.

Referring now to Figure 2 of the drawings, therein is illustrated in greater detail lower seal segment 16 of coupling 10 of Figure 1. As discussed above, the box end of second member 12 has a wall section 19 which defines aperture 20 having a frusto-conical profile. The pin end of tubular member 11 presents a convex surface 21 to wall surface 19 such that a metal-to-metal seal is established at contact area 22 between the two surfaces. It will be seen that, upon the forces of assembly, surfaces 19 and 21 will typically diverge from contact area 22, at least in the direction of adjacent end 25 of first member 11, the direction from which pressure to be sealed against will flow. This angle of divergence may vary in proportions, but is typically within a range of from virtually 0° to 20° of divergence. While such a range is not a limitation on the present invention, the preferred angle of divergence will preferably be on the order of from 0° to 10°. It will be understood that although this divergence is not necessary for the practice of the present invention, this divergence will often occur, either through geometric design of the two members and/or through the forces exerted upon the members through the torque loading of coupling and fluid pressures within the members.

First member 11 contains a circumferential groove 24 between contact area 22 and end 25 of first member 11. Upper edge 30 of groove 24 may be directly adjacent a lower boundary of contact area 22 or may be situated along the distance intermediate contact area 22 and end 25 of first member 11. Surface 21 at lower edge 32 of groove 24 will not contact surface 19 but will define a gap between surfaces 19 and 21 at that location. This gap may be formed by a continuation of a divergent angle originating at or towards contact area 22, as illustrated in Figure 2, or may be formed by an abrupt reduction in diameter of first member 11 at lower edge 32 of groove 24, as indicated generally in Figure 6. Situated in groove 24 is seal member 26. Seal member 26 is preferably constructed of an elastic material. The material must maintain elastic properties at the temperatures of the intended environment in which seal member 26 will be placed. It will be apparent to those skilled in the art that many fluorocarbon plastics are suitable for this usage. In many circumstances, it will further typically be most preferable to use a material, such as a fluorocarbon plastic which is heavily filled, such as with various percentages of metal powders, graphite, and/or fiberglass as is kown in the art.

Referring briefly to Figure 6 of the drawings, therein is illustrated seal member 26 in a normal, or unstressed condition. Seal member 26 is preferably constructed to such dimensions that, when first member 11 is separated from second member 12, seal member 26 may be stretched over the lower portion of member 11 and will return to its original dimension holding it in general contact with bottom surface 28 of groove 24. Groove 24 is depicted as presenting a generally rectangular cross-section, in a preferred form thereof. When such a generally rectangularly formed groove is used, it is also preferable that seal member 26 have a generally rectangular form, although each corner of seal member 26 is preferably chamfered for reasons to be discussed herein below. It is optional that these chamfers do not remove more than one-half the surface area of any one side. Seal member 26 and groove 24 are preferably cooperatively sized such that seal member 26 is securely engaged within groove 24. It will been seen that seal member 26 protrudes above surface 21 of member 11 at both upper edge 30 and lower edge 32 thereof. The degree of this extension will vary between applications, but is preferably designed such that when tubular member 11 is engaged with tubular member 12 in the position in which a seal is desired to be established, the interference, or distortion, of seal member 26 in response to the pressure of surface 19 second member 12 will be approxiately 6 to 10 times the interference designed for the metal-to-metal seal at contact area 22, up to a preferred maximum of 0.051 cm interference. It should be clearly understood that these ranges are exemplary only and represent only the most preferred form of the invention.

Seal member 26 and groove 24 should be cooperatively conformed with groove 24 such that a compression on seal member 26 or a pressure exerted on the extending portion thereof does not cause seal member 26 to leave its placement within groove 24. When seal member 26 and groove 24 are of generally rectangular forms, as illustrated, this may be achieved by maintaining the total height 34 of seal member 26 to a dimension preferably between two-thirds of or equal to length 36 of bottom 28 of groove 24. It is anticipated that other forms of seal members and grooves may cooperate to form this retention function, for example, cooperatively engageable dovetailed grooves and seal members.

Referring again to Figure 2, it will be seen that when seal member 26 is compressed in response to the proximity of surface 19, seal member 26 distorts. The chamfered corners of seal member 26 facilitate the distortion of seal member 26 with the confines of groove 24. Because of the interference between seal member 26 and surface 19 as discussed above, a seal is formed as soon as members 11 and 12 are brought into the designed proximate relation to one another. When pressure is applied to seal member 26 from the direction of end 25 of member 11, seal member 26 will self energize and become more effective. The pressure will urge seal member 26 into increasingly secure engagement with surface 21. If seal member 26 is situated a distance from contact area 22, such that surfaces 19 and 21 diverge from contact area 22 in the direction of seal member 26, the elasticity of seal member 26 will allow it to distort into the decreasing dimension between surfaces 19 and 21 on the down-pressure side of seal member 26 forming an increasingly secure seal.

Similarly, relative thermal expansion of seal member 26 compared to members 11 and 12, due to the different thermal coefficients of expansion discussed above, will not cause seal member 26 to urge members 11 and 12 apart. In such a circumstance, seal member 26 will distort into the gap between surface 19 and surface 21 adjacent lower edge 32 of groove 24 and may also distort into the gap between surface 19 and surface 21 at upper edge 30 of groove 24, if such gap exists. Because of the distortion of seal member 26 into this annular space, seal member 26 does not serve to force members 11 and 12 apart, but does serve to effectively seal between them. Further, it will be appreciated that because seal member 26 is located prior to contact area 22 in the fluid pressure flow, seal member 26 serves to protect surfaces 19 and 21 adjacent contact area 22 from corrosive elements of the fluid flow. However, it will be appreciated that should a pressure flow be directed from the opposite direction, ie., wherein it contacts the metal-to-metal seal at contact area 22 and causes it to vent, such pressure will then contact seal member 26 forcing it the reverse direction and causing it to distort in the opposite direction, into the gap between surfaces 19 and 21 and allowing such pressure to vent through the seal. If the pressure then reverses in the original direction, seal member 26 will be urged into its original engagement position and the seal will be reestablished.

Upper seal segment 14 is constructed in a similar manner to lower seal segment 16. It will be seen that a metal-to-metal seal is again preferably formed by the contact of seal surfaces 42 and 44. This metal-to-metal seal is adjacent the thread coupling. Seal mxmber 48 is retained within a groove 50, preferably in surface 44 of box member 12. On the opposite side of seal member 48 from the metal-to-metal seal, a gap is again formed between seal surfaces 42 and 44, and seal member 48 will cooperate with the gap in the manner described with respect to lower seal segment 16.

It will be appreciated that because upper and lower sealing segments are placed at opposite extremes of the thread annulus (17 in Figure 1), should any fluid be trapped within the thread annulus, a significant pressure caused by the expansion of that fluid will vent through either upper or lower sealing segment 14 or 16 in the manner described above, thereby preventing damage to the integrity of the threaded coupling. Although in this preferred embodiment, a metal-to-metal seal is formed between the two members, it is to be understood that such is not necessary for the practice of the present invention, though it is preferable that seal surfaces 19 and 21 converge to a location closely proximate one another.

Referring now to Figure 3 of the drawings, therein is illustrated a coupling 60 between a first member 62 and a second member 64. It will be seen that the thread section 66 of the coupling includes a step-thread design as is known to the art for construction of high integrity casing and tubing couplings. It will be seen that upper and lower sealing segments 68 and 70 respectively are located proximate each end of thread section 66 and function in exactly the same manner as that described above wherein the thread section is continuous.

Referring now to Figure 5 of the drawings, therein is illustrated a coupling 70 also including a step-thread design. Upper seal segment 72 is located intermediate the upper and lower thread sections 74 and 76, respectively. Thread couplings 74 and 76 have negative angle load flanks 78 on the threads, thus forming a hooked thread design. Metal-to-metal seal 80 is at a reverse angle from thread load flanks 78 and provides a stop shoulder for the thread coupling.

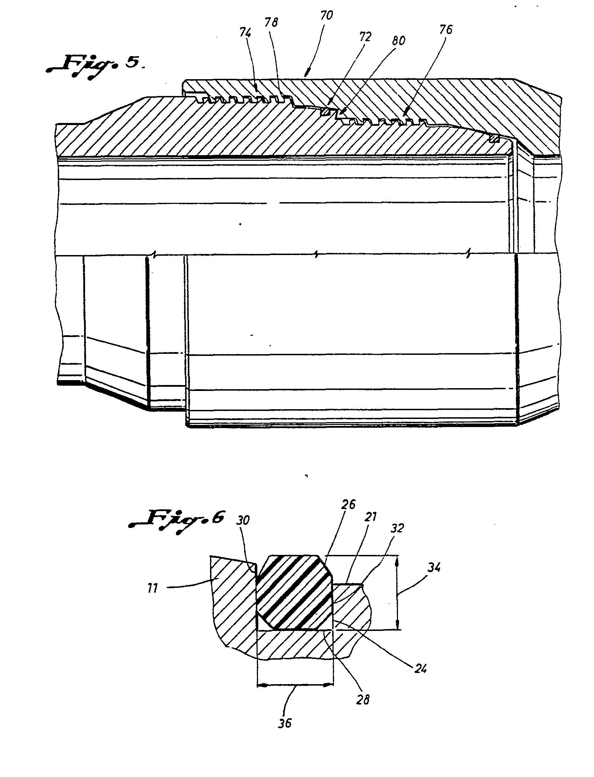

Referring now also to Figure 4 of the drawings, therein is illustrated upper seal 72 of Figure 5 in greater detail. Upper seal segment 72 has a metal-to-metal seal 80 formed by abutting shoulders 82 and 84 on tubular members 94 and 96, respectively. Seal 80 is in somewhat perpendicular relation to the axis of tubular members 94 and 95. Seal surfaces 86 and 88 are then preferably near seal 80 but relatively axially aligned with tubular members 94 and 96. Seal member 98 is retained within groove 100 in seal surface 86. Again, although a gap between seal surfaces 86 and 88 between seal member 98 and seal 80 is not essential to the present invention, such is typically necessary for the proper coupling of members 94 and 96. A gap is again formed on the opposite side of seal member 98 from seal 80. In the illustrated example, this is accomplished by a diverging angle between seal surfaces 86 and 88, said angle originating at the corner of seal 80. As discussed with respect to lower end seal 16 in Figure 1, other means may be utilized of achieving this gap. Upper seal segment 72 operates in the same manner as do the previously described seal segments, sealing to pressure which has traversed upper thread coupling 74 while venting to pressure within lower thread section 76.

## Claims

1. A threaded coupling between two tubular members comprising:

an internally threaded box end on the one (12) of the tubular members (11),

an externally threaded pin end on the other tubular member (11), a first annular surface (19) on the box end,

a second annular surface (21) on the pin end, said first and second surfaces being adapted to form a metal-to-metal seal area (22) when the pin end is assembled into said box end, and

a deformable annular seal member (26) disposed in a groove (24) and located between said first and second annular surfaces of said box end and pin end of the assembled tubular members (11, 12),

characterized in that said groove (24) is provided in one of said surfaces and located outside of said metal-to-metal seal area (22) on the opposite side of said seal area with respect to the threaded area of the tubular members, the seal member (26) protruding past the surface containing said groove to contact the other surface, the first surface being spaced from contact with said second surface at least at the edge of the groove (24) remote from said metal-to-metal seal area (22) to form an annular gap between the surfaces (19, 21) to permit the seal member (26) to extrude when thermally expanded and to allow pressure to vent between the seal member (26) and the other surface (21 or 19).

2. The coupling of claim 1, wherein said groove is provided in said second annular surface (21).

3. The coupling of claim 1 or 2, wherein said seal member (26) has a generally rectangular cross-section.

4. The coupling of claim 3, wherein the corners of said seal member are chamfered.

5. The coupling of anyone of the claims 1 to 4, wherein said first annular surface and said second annular surface converge to form said metal-to-metal seal area (22) on a first side of said seal member (26).

6. The coupling of claim 5, wherein said groove (24) has an upper edge (30) and a lower edge (32), the lower edge being further away from the metal-to-metal seal area than the upper edge and the gap is formed at the lower edge (32) of the groove (24).

7. The coupling of any one of the claims 1 to 6, wherein said first and second annular surfaces are divergent from the metal-to-metal seal area (22) to form said gap.

8. The coupling of any one of the claims 1 to 7, wherein said elastic sealing member is formed of a fluorocarbon plastic.

9. The coupling of any one of the claims 1 to 7, wherein said elastic sealing member is formed of a filled fluorocarbon plastic.

10. The coupling of claim 9, wherein said filled fluorocarbon plastic includes graphite.

11. The coupling of claim 9, wherein said filled fluorocarbon plastic includes fiberglass.

12. The coupling of any one of the claims 1 to 11, wherein a second annular gap exists between said first and second annular surfaces at the other edge of said groove in said first annular surface, said first annular gap having a larger dimension than said second annular gap, said first and second annular gap being formed by a non-parallel relation between said first and second annular surface.

13. The coupling of any one of the claims 2 to 12, wherein

said first annular surface is located at a first end (16) of the internally threaded box end of said first tubular member (12);

said second annular surface is located at a first end of the externally threaded pin end of said second tubular member (11), said second annular surface cooperating with said first annular surface to form a first metal-to-metal seal area when said first and second tubular members are threadably coupled; and further comprising

a third annular surface (72) on the box end of said first tubular member (12), but axially spaced from said first annular surface (19),

a fourth annular surface (44) on the pin end of said second tubular member (11), but axially spaced from said second annular surface (21), said fourth annular surface and said third annular surface being adapted to form a second metal-to-metal seal area adjacent the threads of the pin and box, but axially spaced from said first metal-to-metal seal area, when the pin end is asembled into the box end, said third annular surface having a second circumferential groove (50) therein located outside of said second metal-to-metal seal area on the opposite side of said second seal area with respect to the threaded area of the tubular member, and

a second deformable annular seal member (48) disposed within said second groove (50) in said third annular surface (42), said second seal member (48) protruding past said third annular surface to said fourth annular surface, said fourth annular surface being spaced from contact with said third annular surface at one edge of said second groove (50) remote from said second metal-to-metal seal area to form a second annular gap therebetween to permit the second seal member to extrude when thermally expanded and to allow pressure to vent between the second seal member and the fourth annular surface.

14. The coupling of claim 13, wherein said first and second annular surfaces (19, 21) diverge in a first direction on said first side of said annular groove on said second annular surface (21) and wherein said third and fourth annular surfaces (42, 44) diverge in a second direction on said first side of said annular groove in said third annular surface (42) when said first and second tubular members (11, 12) are coupled together.

15. The coupling of claim 14, wherein a step thread is provided having negative angle load flanks, said thread step being provided in the portion of the coupling comprised between said first and second metal-to-metal seal areas.

16. The coupling of claim 14, wherein a step thread is provided having negative angle load flanks, said third and fourth annular surfaces being located at a non-threaded intermediate portion of said first and second member, respectively.

17. The coupling of any one of the claims 1 to 16, wherein said first and second tubular members are lengths of well casing.

18. The coupling of claim 17, wherein said first and second tubular members are lengths of well tubing.

**Patentansprüche**

1. Schraubkupplung zwischen zwei rohrförmigen Teilen, mit:

einem mit Innengewinde versehenen Muffenende an dem einen (12) der rohrförmigen Teile (11),

einem mit Außengewinde versehenen Zapfenende an dem anderen rohrförmigen Teil (11),

einer ersten ringförmigen Fläche (19) an dem Muffenende,

einer zweiten ringförmigen Fläche (21) an dem Zapfenende, wobei die erste und die zweite Fläche in der Lage sind, einen Metal-Metall-Dichtbereich (22) zu bilden, wenn das Zapfenende in das Muffenende eingefügt wird, und

einem verformbaren ringförmigen Dichtteil (26), das in einer Nut (24) angeordnet ist und sich zwischen der ersten und der zweiten ringförmigen Fläche des Muffenendes und des Zapfenendes der zusammengefügten rohrförmigen Teile (11, 12) befindet,

dadurch gekennzeichnet, daß die Nut (24) in einer der Flächen vorgesehen und außerhalb des Metall-Metall-Dichtbereiches (22) auf der entgegengesetzten Seite des Dichtbereiches in bezug auf den mit Gewinde versehenen bereich der rohrförmigen Teile angeordnet ist, wobei das Dichtteil (26) über die Fläche, welches die Nut enthält, vorsteht und mit der anderen Fläche in Kontakt ist, wobei die erste Fläche Abstand von dem Kontakt mit der zweiten Fläche wenigstens an dem Rand der Nut (24) hat, der von dem Metall-Metall-Dichtbereich (22) entfernt ist, um einen ringförmigen Spalt zwischen den Flächen (19, 21) zu bilden und dem Dichtteil (26) zu gestatten herauszutreten, wenn es thermisch aufgeweitet wird, und den Druck zwischen dem Dichtteil (26) und der anderen Fläche (21 oder 19) abzulassen.

2. Kupplung nach Anspruch 1, wobei die Nut in der zweiten ringförmigen Fläche (21) vorgesehen ist.

3. Kupplung nach Anspruch 1 oder 2, wobei das Dichtteil (26) einen insgesamt rechteckigen Querschnitt hat.

4. Kupplung nach Anspruch 3, wobei die Ecken des Dichtteils abgeschrägt sind.

5. Kupplung nach einem der Ansprüche 1 bis 4, wobei die erste ringförmige Fläche und die zweite ringförmige Fläche konvergieren, um den Metall-Metall-Dichtbereich (22) auf einer ersten Seite des Dichtteils (26) zu bilden.

6. Kupplung nach Anspruch 5, wobei die Nut (24) einen oberen Rand (30) und einen unteren Rand (32) hat, wobei der untere Rand weiter weg von dem Metall-Metall-Dichtbereich als der obere Rand ist und wobei der Spalt an dem unteren Rand (32) der Nut (24) gebildet ist.

7. Kupplung nach einem der Ansprüche 1 bis 6, wobei die erste und die zweite ringförmige Fläche von dem Metall-Metall-Dichtbereich (22) aus divergent sind, um den Spalt zu bilden.

8. Kupplung nach einem der Ansprüche 1 bis 7, wobei das elastische Dichtteil aus einem Fluorkohlenstoffkunststoff gebildet ist.

9. Kupplung nach einem der Ansprüche 1 bis 7, wobei das elastische Dichtteil aus einem mit Füllstoff versetzten Fluorkohlenstoffkunststoff gebildet ist.

10. Kupplung nach Anspruch 9, wobei der mit Füllstoff versetzte Fluorkohlenstoffkunststoff Graphit enthält.

11. Kupplung nach Anspruch 9, wobei der mit Füllstoff versetzte Fluorkohlenstoffkunststoff Glasfasern enthält.

12. Kupplung nach einem der Ansprüche 1 bis 11, wobei ein zweiter ringförmiger Spalt zwischen der ersten und der zweiten ringförmigen Fläche an dem anderen Rand der Nut in der ersten ringförmigen Fläche vorhanden ist, wobei der erste ringförmige Spalt eine größere Abmessung als der zweite ringförmige Spalt hat und wobei der erste und der zweite ringförmige Spalt durch eine nichtparallele Beziehung zwischen der ersten und der zweiten ringförmigen Fläche gebildet sind.

13. Kupplung nach einem der Ansprüche 2 bis 12, wobei die erste ringförmige Fläche an einem ersten Ende (16) des mit Innengewinde versehenen Muffenendes des ersten rohrförmigen Teils (12) vorgesehen ist;

die zweite ringförmige Fläche an einem ersten Ende des mit Außengewinde versehenen Zapfenendes des zweiten rohrförmigen Teils (11) vorgesehen ist, wobei die zweite ringförmige Fläche gemeinsam mit der ersten ringförmigen Fläche einen ersten Metall-Metal-Dichtbereich bildet, wenn das erste un das zweite rohrförmige Teil miteinander verschraubt sind; und weiter beinhaltend eine dritte ringförmige Fläche (72) an dem Muffenende des ersten rohrförmigen Teils (12), aber in axialem Abstand von der ersten ringförmigen Fläche (19),

eine vierte ringförmige Fläche (44) an dem Zapfenende des zweiten rohrförmigen Teils (11), aber in axialem Abstand von der zweiten ringförmigen Fläche (21), wobei die vierte ringförmige Fläche und die dritte ringförmige Fläche in der Lage sind, einen zweiten Metall-Metall-Dichtbereich benachbart zu den Gewinden des Zapfens und der Muffe zu bilden, aber in axialem Abstand von dem ersten Metall-Metall-Dichtbereich, wenn das Zapfenende in das Muffenende eingefügt ist, wobei die dritte ringförmige Fläche eine zweite Umfangsnut (50) hat, die darin außerhalb des zweiten Metall-Metall-Dichtbereiches auf der entgegengesetzten Seite des zweiten Dichtbereiches in bezug auf den Gewindebereich des rohrförmigen Teils angeordnet ist, und

ein zweites verformbares ringförmiges Dichtteil (48), das in der zweiten Nut (50) in der dritten ringförmigen Fläche (42) angeordnet ist, wobei das zweite Dichtteil (48) über die dritte ringförmige Fläche bis an die vierte ringförmige Fläche vorsteht, wobei die vierte ringförmige Fläche Abstand von dem Kontakt mit der dritten ringförmigen Fläche an einem Rand der zweiten Nut (50) hat, der von dem zweiten Metall-Metall-Dichtbereich entfernt ist, um einen zweiten ringförmigen Spalt dazwischen zu bilden und dem zweiten Dichtteil zu gestatten, herauszutreten, wenn es thermisch aufgeweitet wird, und Druck zwischen dem zweiten Dichtteil und der vierten ringförmigen Fläche abzulassen.

14. Kupplung nach Anspruch 13, wobei die erste und die zweite ringförmige Fläche (19, 21) in einer ersten Richtung auf der ersten Seite der ringförmigen Nut auf der zweiten ringförmigen Fläche (21) divergieren und wobei die dritte und die vierte ringförmige Fläche (42, 44) in einer zweiten Richtung auf der ersten Seite der ringförmigen Nut in der dritten ringförmigen Fläche (42) divergieren, wenn das erste und das zweite rohrförmige Teil (11, 12) miteinander gekuppelt sind.

15. Kupplung nach Anspruch 14, wobei ein Stufengewinde vorgesehen ist, das negative Winkelbelastungsflanken hat, wobei die Gewindestufe in dem Teil der Kupplung vorgesehen ist, der sich zwischen dem ersten und dem zweiten Metall-Metall-Dichtbereich befindet.

16. Kupplung nach Anspruch 14, wobei ein Stufengewinde vorgesehen ist, das negative Winkelbelastungsflanken hat, wobei die dritte und die vierte ringförmige Fläche auf einem nicht mit Gewinde versehenen Zwischenteil des ersten bzw. zweiten Teils angeordnet sind.

17. Kupplung nach einem der Ansprüche 1 bis 16, wobei das erste und das zweite rohrförmige Teil Abschnitte einer Bohrlochverrohrung sind.

18. Kupplung nach Anspruch 17, wobei das erste und das zweite rohrförmige Teil Abschnitte eines Bohrlochsteigrohres sind.

**Revendications**

1. Accouplement à filetage entre deux éléments tubulaires comprenant un manchon extrême fileté intérieurement sur l'un (12) des éléments tubulaires, une broche extrême filetée extérieurement sur l'autre élément tubulaire (11), une première surface annulaire (19) sur le manchon extrême, une seconde surface annulaire (21) sur la broche extrême, lesdites première et seconde surfaces étant conçues pour former une zone d'étanchéité métal sur métal (22) lorsque la broche extrême est assemblée à l'intérieur du manchon extrême, et un élément d'étanchéité annulaire déformable (26) disposé dans une rainure (24) située entre les première et seconde surfaces annulaires du manchon extrême et de la broche extrême des éléments tubulaires assemblés (11, 12), caractérisé en ce que la rainure (24) est prévue, sur une desdites surfaces et est située à l'extérieur de la surface d'étanchéité métal sur métal (22), du côté opposé de ladite surface d'étanchéité par rapport à la surface filetée des éléments tubulaires, l'élément d'étanchéité (26), faisant saillie par rapport à la surface dans laquelle est réalisée ladite rainure pour venir en contact avec l'autre surface, la première et la seconde surface étant séparées par un espace, au moins à l'endroit du bord de la rainure (24) qui est éloigné de la surface d'étanchéité métal sur métal (22), de façon à former un espace annulaire entre les surfaces (19, 21) pour permettre à l'élément d'étanchéité (26) d'y fluer lorsqu'il se dilate thermiquement et pour permettre à la pression de s'échapper entre l'élément d'étanchéité (26) et l'autre surface (21 ou 19).

2. Accouplement suivant la revendication 1 caractérisé en ce que ladite rainure prévue dans la seconde surface annulaire (21).

3. Accouplement suivant la revendiation 1 ou 2 caractérisé en ce que ledit élément d'étanchéité (26) est de section droite générale rectangulaire.

4. Accouplement suivant la revendication 3 caractérisé en ce que les coins de l'élément d'étanchéité sont chanfreinés.

5. Accouplement suivant l'une quelconque des revendications 1 à 4 caractérisé en ce que les première et seconde surfaces annulaires convergent pour former la zone d'étanchéité métal sur métal (22) sur un premier côté de l'élément d'étanchéité (26).

6. Accouplement suivant la revendication 5 caractérisé en ce que la rainure (24) comporte un bord supérieur (30) et un bord inférieur (32), le bord inférieur étant plus éloigné de la surface d'étanchéité métal sur métal que le bord supérieur, et l'espace est formé à l'endroit du bord inférieur (32) de la rainure (24).

7. Accouplement suivant l'une quelconque des revendications 1 à 6 caractérisé en ce que les première et seconde surfaces annulaires sont divergentes à partir de la zone d'étanchéité métal sur métal (22) de façon à former ledit espace.

8. Accouplement suivant l'une quelconque des revendications 1 à 7 caractérisé en ce que l'élément d'étanchéité elastique est formé d'une matière plastique fluorocarbonée.

9. Accouplement suivant l'une quelconque des revendications 1 à 7 caractérisé en ce que l'élément d'étanchéité élastique est formé d'une matière plastique fluorocarbonée chargée.

10. Accouplement suivant la revendication 9 caractérisé en ce que la matière plastique fluorocarbonée contient du graphite.

11. Accouplement suivant la revendication 9 caractérisé en ce que la matière plastique fluorocarbonée chargée comprend de la fibre de verre.

12. Accouplement suivant l'une quelconque des revendications 1 à 11 caractérisé en ce qu'un second espace annulaire existe entre les première et seconde surfaces annulaires à l'endroit de l'autre bord de la rainure dans la première surface annulaire, le premier espace annulaire ayant des dimensions plus importantes que celles du second espace annulaire, les premier et second espaces annulaires étant formés par des parois non parallèles des première et seconde surfaces annulaires.

13. Accouplement suivant l'une quelconque des revendications 2 à 12 dans lequel la première surface annulaire est prévue à une première extrémité (16) du manchon fileté intérieurement du premier élément tubulaire (12), la seconde surface annulaire est prévue à une première extrémité de la broche filetée extérieurement du second élément tubulaire (11), la seconde surface annulaire coopérant avec la première surface annulaire de façon à former une première zone d'étanchéité métal sur métal lorsque les premier et second éléments tubulaires sont accouplés par vissage, et comprenant de plus, une troisième surface annulaire (72) sur le manchon extrême du premier élément tubulaire (12), cette troisième surface étant espacée axialement de la première surface annulaire (19), une quatrième surface annulaire (44) sur la broche extrême du second élément tubulaire (11), cette quatrième surface étant espacée axialement de la seconde surface annulaire (21), la quatrième surface annulaire et la troisième surface annulaire étant conçues pour former une seconde surface d'étanchéité métal sur métal adjacente aux filetages de la broche et du manchon, mais qui est espacée axialement de la première surface d'étanchéité métal sur métal lorsque la broche extrême est mise en place dans le manchon extrême, la troisième surface annulaire comportant une second rainure circonférentielle (50) logée à l'extérieur de la seconde surface d'étanchéité métal sur métal, du côté opposé de la seconde surface d'étanchéité par rapport à la surface filetée de l'élément tubulaire, et un second élément d'étanchéité annulaire déformable (48) disposé à l'intérieur de la seconde rainure (50) dans la troisième surface annulaire (42), le second élément d'étanchéité (48) faisant saillie par rapport à la troisième surface annulaire et s'étendant vers la quatrième surface annulaire, cette quatrième surface annulaire étant espacée, sans contact, de la troisième surface annulaire à l'endroit du bord de la second rainure (50), qui est éloignée de la second surface d'étanchéité métal sur métal, pour former, entre les troisième et quatrième surfaces un second espace annulaire de façon à perméttre au second élément d'étanchéité de fluer à l'intérieur de cet espace lorsqu'il se dilate thermiquement et pour autoriser l'échappement de la pression entre le second élément d'étanchéité et la quatrième surface annulaire.

14. Accouplement suivant la revendication 13 caractérisé en ce que les première et seconde surfaces annulaires (19, 21) divergent dans une première direction, du premier côté de la rainure annulaire prévue sur la seconde surface annulaire (21), et les troisième et quatrième surfaces annulaires (42, 44) divergent dans une seconde direction, du premier côté de la rainure annulaire prévue dans la troisieme surface annulaire (42) lorsque les premier et second éléments tubulaire (11, 12) sont accouplés.

15. Accouplement suivant la revendication 14 caractérisé en ce qu'il comporte un filetage étagé sur deux diamètres dont les flancs de charge présentent un angle de dépouille négatif, ledit filetage chargé sur deux diamètres étant prévu dans la portion de l'accouplement comprise entre les première et seconde surfaces d'étanchéité métal sur métal.

16. Accouplement suivant la revendication 14 caractérisé en ce qu'il comporte un filetage étagé sur deux diamètres comportant des flancs de charge à angle de dépouille négatif, les troisième et quatrième surfaces annulaires étant prévues respectivement dans une portion intermédiaire non filetée desdits premier et second éléments.

17. Accouplement suivant l'une quelconque des revendications 1 à 16 caractérisé en ce que les premier et second éléments tubulaires sont des tronçons d'un cuvelage de puits.

18. Accouplement suivant la revendication 17 caractérisé en ce que les premier et second éléments tubulaires sont des tronçons d'un tubage de puits.

Fig. 1

Fig. 2

Fig. 3

Fig. 4

_Fig._ 5.

74   78   70   72   80   76

_Fig._ 6   30   26   21   32   34

11   24   28

36